# EUROPEAN PATENT APPLICATION

(11) **EP 1 550 815 A2**
(43) Date of publication of application: **06.07.2005**
(21) Application number: 04257914.4
(22) Date of filing: 17.12.2004
(51) Int. Cl.: F16C 35/06, F16C 35/12, B25B 27/00

(54) **Wheel differential bearing adjustment tool**

(30) Priority: 22.12.2003 US 745130
(71) Applicant: DANA CORPORATION, Toledo, OH 43697 (US)
(72) Inventor: Crepas, Robert E, Otsego, Michigan 49078 (US)
(74) Representative: Cheyne, John Robert Alexander Mackenzie

(57) **Abstract**

A differential wheel bearing adjustment tool is provided for use with wheel differential bearings having threaded bearing cups. The tool includes a pair of plates that engage the outboard ends of bearing cups in sets of bearings rotatably supporting the plain half and flanged half of a differential case within a differential carrier. A threaded rod extends between and through the two plates and nuts are disposed on the rod on sides of the plates opposite the bearing cups. Rotation of the one or both of the plates causes a corresponding adjustment in the position of the bearings thereby resulting in positional adjustment of the bearings.

## Description

### BACKGROUND OF THE INVENTION

### 1. Field of the Invention

This invention relates to bearing adjustments in wheel differentials and, in particular, to a tool for adjusting bearing preload.

### 2. Discussion of Related Art

A vehicle drive axle contains a wheel differential used to allows wheels on opposite sides of the axle to rotate at different speeds. The wheel differential includes a pinion gear that receives power input to the drive axle, a ring gear in mesh with the pinion gear and a differential case affixed to the ring gear for rotation therewith. The differential case supports a plurality of bevel gears used to transfer power to, and divide power between, axle shafts supporting the wheels on either side of the vehicle. The components of the wheel differential are held within the drive axle housing or differential carrier. The differential case is supported for rotation within the differential carrier by two sets of coaxial bearings.

As set forth in commonly assigned U.S. Patent No. 6,659,651, the entire disclosure of which is incorporated herein by reference, each bearing set may include a threaded bearing cup configured to mate with corresponding threads in the differential carrier. The use of threaded bearing cups creates a need for an improved tool that can be used to adjust the bearing sets.

The inventors herein have recognized a need for a wheel differential bearing adjustment tool and a method of adjusting wheel differential bearings that will minimize and/or eliminate one or more of the above-identified deficiencies.

### SUMMARY OF THE INVENTION

The present invention provides a wheel differential bearing adjustment tool as well as a method for adjusting wheel differential bearings.

A wheel differential bearing adjustment tool in accordance with the present invention may include a first plate configured to engage a bearing cup in a first bearing set supporting a differential case within a differential carrier. The tool may further include a second plate spaced from the first plate and configured to engage a bearing cup in a second bearing set supporting the differential case within the differential carrier. The tool may further include a threaded rod extending between the first and second plates and first and second threaded members disposed on opposite sides of the first and second plates, respectively, relative to the first and second bearing sets and threaded on the rod. Rotation of one of the first and second threaded members adjusts a position of at least one of the first and second bearing sets.

A method for adjusting wheel differential bearings in accordance with the present invention may include the steps of: engaging a first bearing cup in a first bearing set with a first plate, the first bearing set supporting a differential case within a differential. The method may further include the step of engaging a second bearing cup in a second bearing set with a second plate, the second bearing set spaced from the first bearing set and supporting the differential case within the differential. The method may further include the steps of coupling the first and second plates and rotating the first plate to adjust a position of the first bearing cup.

A wheel differential bearing adjustment tool and method for adjusting wheel differential bearings in accordance with the present invention are advantageous. The tool and method provide an efficient means for accurately adjusting bearing preload and facilitate the use of a threaded bearing cup as described in commonly assigned U.S. Patent No. 6,659,651.

These and other advantages of this invention will become apparent to one skilled in the art from the following detailed description and the accompanying drawings illustrating features of this invention by way of example.

### BRIEF DESCRIPTION OF THE DRAWINGS

Figures 1 is a partially exploded perspective view of a wheel differential bearing adjustment tool in accordance with the present invention.

Figure 2-3 are plan views of one component of the tool of Figure 1.

Figure 4 is a cross-sectional view of the component of Figures 2 taken along lines 4-4.

Figures 5A-B are flowchart diagrams illustrating a method for adjustment of wheel differential bearings in accordance with the present invention.

### DETAILED DESCRIPTION OF EMBODIMENTS OF THE INVENTION

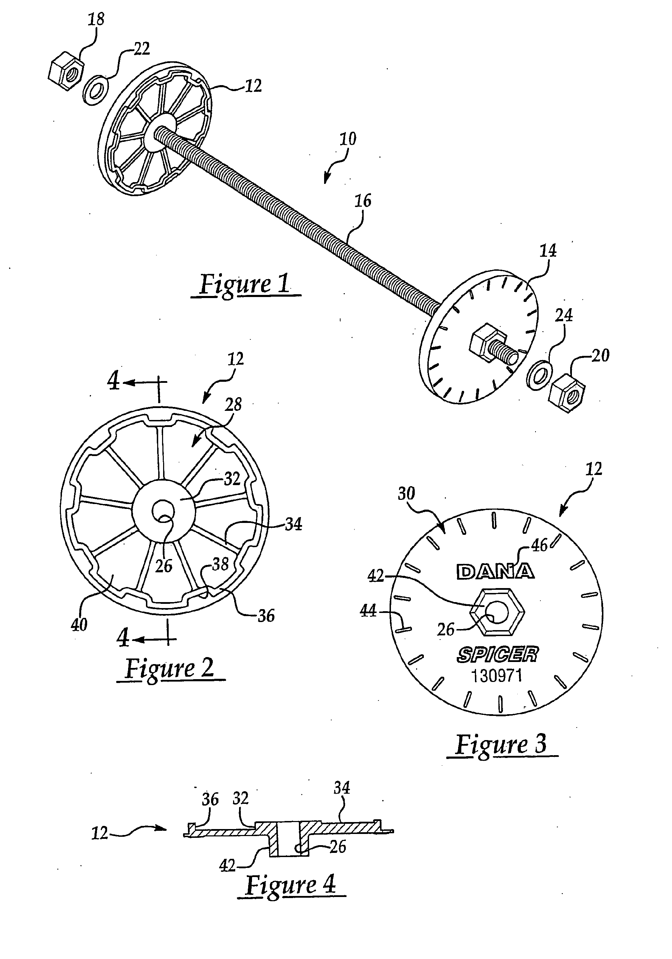

Referring now to the drawings wherein like reference numerals are used to identify identical components in the various views, Figures 1 2 illustrates a wheel differential bearing adjustment tool 10 in accordance with the present invention. Tool 10 includes plates 12, 14 and means, such as rod 16, and members 18, 20, for adjusting a position of at least one of said first and second bearing plates to thereby adjust the position of a bearing cup of a corresponding wheel differential bearing set. Tool 10 may also include washers 22, 24.

Plates 12, 14 are provided to engage outboard sides of bearing cups (best shown in Figure 6) in two spaced bearing sets (not shown) supporting a differential case for rotating within a differential carrier. Plates 12, 14 may be identical in shape and/or appearance and be made from conventional metals and metal alloys. Each plate 12, 14 may be substantially circular in shape with a diameter sized relative to the size of the bearing cup. Each plate 12, 14 may also define:an aperture 26 extending therethrough for a purpose described hereinbelow. The aperture 26 may be disposed about a central axis extending through each plate 12, 14. Referring to Figures 2-3, each plate 12, 14, has an inboard side 28 configured to engage a corresponding bearing cup and an outboard side 30 facing away from the bearing cup.

Referring to Figure 2, inboard side 28 is configured to engage a corresponding bearing cup. Side 28 defines a central, axially extending hub 32 and a plurality of spokes 34 radiating from hub 32. Spokes 34 terminate at an undulating wall 36 before reaching a radially outer periphery of plates 12, 14. Wall 36 extends circumferentially around plate 12, 14, moving inward and outward to define a plurality of equidistant, angularly spaced notches 38. Each notch 38 is centered on a corresponding spoke 34. Hub 32, spokes 34 and wall 36 together define a plurality of angularly spaced hollows 40. The notches 38 formed by wall 36 are configured to receive one or more radially inwardly extending members on a ring affixed to the bearing cup. The ring may have a diameter substantially equal to the diameter of plate 12 or 14 and a complementary shape relative to wall 36.

Referring to Figure 3, outboard side 30 faces away from a bearing cup. Referring to Figure 4, side 30 defines an axially extending hub 42. Referring again to Figure 3, hub 42 may be hexagonal in shape so that hub 42 can be grasped by a tool to cause rotation of plate 12 or 14. It should be understood, that the illustrated shape of hub 42 and that the shape of hub 42 may be varied without departing from the spirit of the present invention. Further, it should be understood that a side 30 could include a variety of structural features to enable receipt of tools used to rotate plate 12 or 14. Side 30 may also include one or more positional indicators 44. In the illustrated embodiment; each indicator 44 comprises a radially extending line. It should be understood, however, that the form of the indicators 44 may vary without departing from the scope of the present invention. Indicators 44 may be angularly spaced on side 30 and may be equidistant from one another.' In the illustrated embodiment, indicators 44 are spaced by approximately eighteen degrees. Side 30 may finally include an identifier 46 to identify the tool and/or bearing sets which in the illustrated embodiment comprises textual information. It should be understood, however, that a variety of identifiers could be used.

Referring again to Figure 1, rod 16 is provided to join plates 12, 14. At least a portion of rod 16 is threaded and the entire rod may be threaded as shown in the illustrated embodiment. Rod 16 is configured to be received within apertures 26 in plates 12, 14 and extends outboard of plates 12, 14 upon assembly. As described in greater detail hereinbelow, rod 16 also extends through each bearing set (and each bearing cup) supporting the differential case within the differential.

Threaded members 16, 18, which may comprise nuts, provided to secure plates 12, 14 on rod 16. Nuts 16, 18 are disposed on outboard sides 30 of plates 12, 14, opposite the inboard sides 28 against which the bearing sets are disposed. Members 16, 18 may be hexagonal in shape to enable a tool to grasp members 16, 18.

Washers 20, 22 may be used in a conventional manner to ensure a tight fitting engagement between members 16, 18 and plates 12, 14. Washers 20, 22 may comprise flat washers.

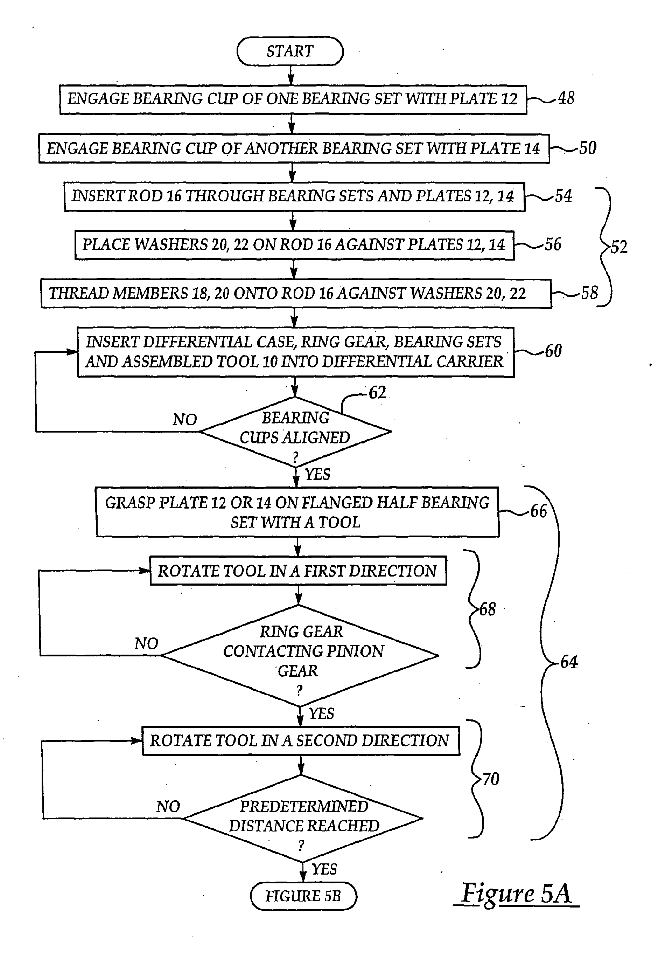

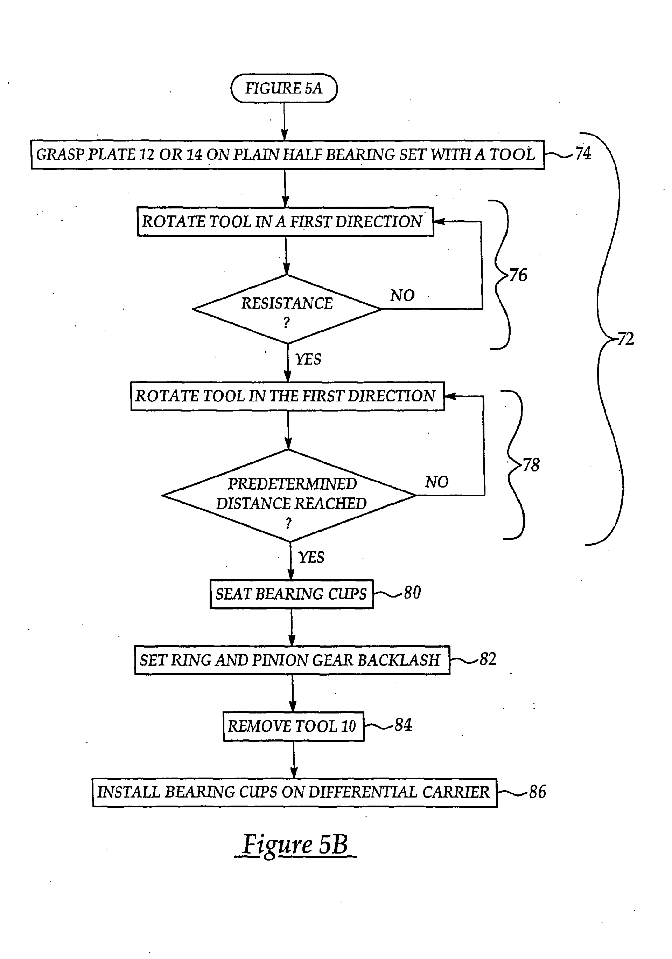

Referring now to Figures 5A-B, a method for adjusting wheel differential bearings in accordance with the present invention will be described. The inventive method may begin with the step 48 of engaging a bearing cup of one of the bearing sets supporting the differential case within the differential using one of plates 12, 14. As will be understood to those of skill in the art, the bearing sets may be referred to as the "plain half" bearing set and the "flanged half" bearing set based on the location of the ring gear as attached to the differential case. The method may continue with the step 50 of engaging a bearing cup in the other bearing set supporting the differential case within the differential carrier using another of plates 12, 14.

Once plates 12, 14 are engaged to the bearing cups, the method may continue with the step 52 of coupling plates 12, 14. Step 52 may include several substeps 54, 56, 58. In substep 54, rod 16 is inserted through the plain and flanged half bearing sets and through the aligned apertures 26 in plates 12, 14. In substep 56, washers 20, 22 are placed on rod 16 and engage the outboard sides 30 of plates 12, 14. Finally, in substep 58, threaded members 16, 18 are threaded onto rod 16 on the outboard sides 30 of plates 12, 14.

Once tool 10 has been assembled, the method may continue with the step 60 of inserting the assembly comprised of the differential carrier, the ring gear, the plain and flanged half bearing sets and the tool 10 into the differential housing in a conventional manner. The method may then continue with the step 62 of determining whether the bearing cups in the bearing sets are properly aligned within the differential carrier. Step 62 can be performed, for example, by determining whether a gap exists between the threads on the bearing cups and the threads on the differential carrier and/or by determining whether the bearing cage in the bearing set is parallel to the edge of the bearing cup of the bearing set. If the bearing sets are not properly aligned, the assembly is removed from the differential carrier and steps 60, 62 are repeated.

After the bearing sets are aligned within the differential carrier, the method continues with the step 64 of rotating one of plates 12, 14 to adjust the position of a corresponding bearing cup. In one embodiment of the invention step 64 may involve rotating the plate 12 or 14 engaging the bearing cup of the flanged half bearing set. Step 64 may include several substeps 66, 68, 70. In substep 66, plate 12 is grasped with a tool. For example, a ratchet and socket may be used to grasp hub 42 on the respective plate 12 or 14. In substep 68, the tool is rotated in a first direction until the ring gear contacts a pinion gear in the differential carrier. In substep 70, the tool is rotated in a second direction, opposite the first direction, a predetermined distance using positional indicators 44 on the outboard side 30 of the plate 12 or 14.

Them method may continued with the step 72 of rotating the other plate 12 or 14 to adjust the position of the bearing cup in the other bearing set. Step 72 may also have several substeps 74, 76, 78. In one embodiment of the invention step 72 may involve rotating the plate 12 or 14 engaging the bearing cup of the plain half bearing set. In substep 74, the plate 12 or 14 is grasped with a tool. Again, for example, a ratchet and socket may be used to grasp hub 42 on the respective plate 12 or 14. In substep 76, the tool is rotated in a first direction until the resistance begins (zero preload) . In substep 78 the tool is rotated further in the first direction a predetermined distance using positional indicators 44 on the outboard side 30 of the plate 12 or 14.

The method may continue with the step 80 of seating the bearing cups by, for example, using a rubber mallet on the bearing cups in a conventional manner. In step 82, the ring and pinion gear backlash is determined using a conventional measurement device and set. In step 84, tool 10 is removed by unscrewing members 16, 18, removing washers 20, 22, sliding rod 16 out from the bearing sets and plates 12, 14 and removing plates 12, 14. Finally, in step 86, bearing caps are affixed to the differential carrier. The ring and pinion gear backlash may be rechecked at this point and reset if necessary.

A wheel differential bearing adjustment tool and method for adjusting wheel differential bearings in accordance with the present invention is advantageous. In particular, the inventive tool and method provide an efficient means for accurately adjusting bearing preload and facilitate the use of bearing sets employing threaded bearing cups.

While the invention has been shown and described with reference to one or more particular embodiments thereof, it will be understood by those of skill in the art that various changes and modifications can be made without departing from the spirit and scope of the invention. For example, it should be understood that the configuration of bracket 34, arm 82, and guide member 86 or bracket 202 and guide members 236, 238 could be replicated on each side of the vehicle frame 10.

## Claims

1. A wheel differential bearing adjustment tool, comprising:
a first plate configured to engage a bearing cup in a first bearing set supporting a differential case within a differential carrier;
a second plate spaced from.said first plate and configured to engage a bearing cup in a second bearing set supporting said differential case within said differential carrier;
a threaded rod extending between said first and second plates; and,
first and second threaded members disposed on opposite sides of said first and second plates, respectively; relative to said first and second bearing sets and threaded on said rod;
wherein rotation of one of said first and second threaded members adjusts a position of at least one of said first and second bearing sets.

2. The wheel differential bearing adjustment tool of claim 1, further comprising a first washer disposed between said first plate and said first threaded member.

3. The wheel differential bearing adjustment tool of claim 2, further comprising a second washer disposed between said second plate and said second threaded member.

4. The wheel differential bearing adjustment tool of claim 1
wherein said first plate includes a circumferential wall defining a plurality of notches and configured to receive said bearing cup of said first bearing set.

5. The wheel differential bearing adjustment tool of claim 1
wherein said first plate includes a plurality of positional indicators on a first side of said plate.

6. The wheel differential bearing adjustment tool of claim 5
wherein said positional indicators are angularly spaced at equal distances' circumferentially on said first side of said first plate.

7. The wheel differential bearing adjustment tool of claim 1
wherein said first plate defines a hub configured for engagement by a tool.

8. A wheel differential bearing adjustment tool, comprising:
a first plate configured to engage a bearing cup in a first bearing set supporting a differential case within a differential carrier;
a second plate spaced from said first plate and configured to engage a bearing cup in a second bearing set supporting said differential case within said differential carrier; and,
means for adjusting a position of at least one of said first and second bearing plates to thereby adjust a position of a corresponding bearing cup in one of said first and second bearing sets.

9. The wheel differential of claim 8 wherein said adjusting means includes:
a threaded rod extending between said first and second plates; and,
first and second threaded members disposed on opposite sides of said first and second plates, respectively, relative to said first and second bearing sets and threaded on said rod.

10. The wheel differential bearing adjustment tool of claim 9, further comprising a first washer disposed between said first plate and said first threaded member.

11. The wheel differential bearing adjustment tool of claim 10, further comprising a second washer disposed between said second plate and said second threaded member.

12. The wheel differential bearing adjustment tool of claim 9
wherein said first plate includes a circumferential wall defining a plurality of notches and configured to receive said bearing cup of said first bearing set.

13. The wheel differential bearing adjustment tool of claim 9
wherein said first plate includes a plurality of positional indicators on a first side of said plate.

14. The wheel differential bearing adjustment tool of claim 13 wherein said positional indicators are angularly spaced at equal distances circumferentially on said first side of said first plate.

15. A method for adjusting wheel differential bearings, comprising the steps of:
engaging a first bearing cup in a first bearing set with a first plate, said first bearing set supporting a differential case within a differential
engaging a second bearing cup in a second bearing set with a second plate, said second bearing set spaced from said first bearing set and supporting said differential case within said differential;
coupling said first and second plates;
rotating said first plate to adjust a position of said first bearing cup.

16. The method of claim 15, further comprising the step of rotating said second plate to adjust a position of said second bearing cup.

17. The method of claim 15 wherein said coupling step includes the substeps of:
inserting a threaded rod through said first and second bearing sets and through aligned apertures in said first and second plates; and,
threading first and second threaded members onto said rod on opposite sides of said first and second plates, respectively, relative to said first and second bearing sets.

18. The method of claim 17, further comprising the step of placing first and second washers on said threaded rod on said opposite sides of said first and second plates prior to said threading step.

19. The method of claim 15 wherein said rotating step includes the substeps of:
grasping said first plate with a tool;
rotating said tool a predetermined distance using positional indicators disposed on a first side of said first plate.

20. The method of claim 19 wherein said positional indicators are angularly spaced at equal distances circumferentially on said first side of said first plate
